# FASCICULE DE BREVET EUROPEEN

(11) **EP 1 817 181 B1**
(45) Date de publication et mention de la délivrance du brevet: **15.04.2009**
(21) Numéro de dépôt: 05819415.0
(22) Date de dépôt: 22.11.2005
(51) Int. Cl.: B60D 1/14

(54) **BOITIER DE FIXATION POUR UN MOYEN DE REMORQUAGE D'UN VEHICULE AUTOMOBILE**
GEHÄUSE ZUR BEFESTIGUNG EINER KRAFTFAHRZEUG-ABSCHLEPPVORRICHTUNG
HOUSING FOR FIXING A MOTOR VEHICLE TOWING MEANS

(30) Priorité: 22.11.2004 FR 0452710
(43) Date de publication de la demande: 15.08.2007
(73) Titulaire: RENAULT S.A.S., 92100 Boulogne Billancourt (FR)
(72) Inventeur: COUSSEAU, Sylvain, F-78000 VERSAILLES (FR); VIVERO, François, F-78150 LE CHESNAY (FR)
(74) Mandataire: Guyon, Rodolphe C.
(86) Numéro de dépôt international: PCT/FR2005/050978
(87) Numéro de publication internationale: WO 2006/054033

(56) Documents cités:
- DE-U1- 20 102 611
- FR-A- 2 558 774
- US-A- 2 712 452
- PATENT ABSTRACTS OF JAPAN vol. 2002, no. 06, 4 juin 2002 (2002-06-04) & JP 2002 053066 A (FUJI HEAVY IND LTD), 19 février 2002 (2002-02-19)
- PATENT ABSTRACTS OF JAPAN vol. 2000, no. 23, 10 février 2001 (2001-02-10) & JP 2001 171560 A (FUJI HEAVY IND LTD), 26 juin 2001 (2001-06-26)

## Description

La présente invention concerne un boîtier de fixation pour un moyen de remorquage d'un véhicule automobile, et plus particulièrement un boîtier comportant au moins une base plan s'étendant principalement selon une première direction et deux battants solidaires de cette base, ces deux battants étant sensiblement parallèles et munis chacun d'un alésage. Un boîtier de fixation connu est publié par example dans FR 2558774 A.

Des moyens de remorquage, et par exemple des moyens de type anneaux de remorquage, peuvent être utilisés aussi bien à l'arrière qu'à l'avant du véhicule. A l'heure actuelle, la problématique posée par l'implantation des anneaux de remorquage à l'arrière du véhicule est différente de celle des anneaux montés à l'avant, où l'on fait traverser à l'anneau de remorquage la traverse avant de choc après vente. Or, pour des contraintes strictes d'empilement lors des chocs après vente, la vis est positionnée dans cette traverse, et maintenue à son extrémité, sans boîtier. Ce mode de réalisation n'est pas optimal par rapport à la tenue des moments engendrés par le débattement de l'anneau.

Pour des implantations sur des longerons arrière, classiquement, un premier renfort est soudé à l'intérieur d'un longeron formant la structure longitudinale arrière du véhicule. Un dispositif de maintien, de type douille, est alors soudé à l'intérieur de ce premier renfort et sert de moyen de fixation de l'extrémité de l'anneau de remorquage. Ce type de réalisation présente un grand nombre de pièces et l'inconvénient de nécessiter un grand nombre d'opérations lors de la mise en place des différentes pièces du dispositif.

La présente invention vise à intégrer dans le longeron un unique boîtier de maintien pour l'anneau de remorquage.

En réponse à des objectifs que l'on retrouve invariablement chez les différents constructeurs automobiles, la présente invention se veut également peu coûteuse et peu encombrante.

Pour répondre à ces objectifs, l'invention propose un boîtier de fixation tel que précédemment cité, caractérisé en ce qu'un premier battant est formé par une première extrémité, selon la première direction, de la base qui est rabattue sensiblement perpendiculairement à cette base.

Selon différentes caractéristique de la présente invention :
- le deuxième battant est formé par une deuxième extrémité de la base, selon la première direction, qui est rabattue sensiblement perpendiculaire à cette base, de sorte que les deux battants soient sensiblement parallèles et que les deux alésages soient sensiblement coaxiaux.
- le boîtier comporte deux montants positionnés latéralement et perpendiculairement à la base plan, et le premier et le deuxième battant sont formés respectivement par une extrémité rabattue du premier et du deuxième flan, de sorte que chaque battant soit positionné de part et d'autre de la base plan selon la première direction.
- le deuxième battant est renforcé par une plaquette nervurée qui est munie d'un alésage correspondant à l'alésage du deuxième battant.
- un écrou est solidarisé sur la plaquette nervurée, en regard de l'alésage du deuxième battant.

L'invention vise à protéger également un agencement de fixation pour un moyen de remorquage d'un véhicule automobile, qui comporte un boîtier selon l'invention, dans lequel le boîtier est soudé à l'intérieur d'un longeron formant la structure du véhicule. Dans un tel agencement, ce boîtier peut être soudé dans le longeron de telle sorte que le premier battant est situé dans le plan contenant l'extrémité du longeron.

L'invention vise à protéger également un agencement de ce type dans lequel le moyen de remorquage est formé d'au moins un tube à l'extrémité duquel un anneau de remorquage est monté, et dont l'autre extrémité est filetée et coopère avec des moyens filetés solidaires du deuxième battant du boîtier, le premier battant présentant un alésage de dimension apte à laisser au tube un passage avec un faible jeu.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un agencement de remorquage comprenant un boîtier selon l'invention et intégré dans un longeron de véhicule automobile, vue depuis l'arrière du véhicule.
- la figure 2 est une représentation en perspective du boîtier et du longeron représentés à la figure 1, vue depuis l'arrière du véhicule.
- la figure 3 est une représentation en perspective du boîtier représenté sur les figures 1 et 2, vue depuis l'avant du véhicule.

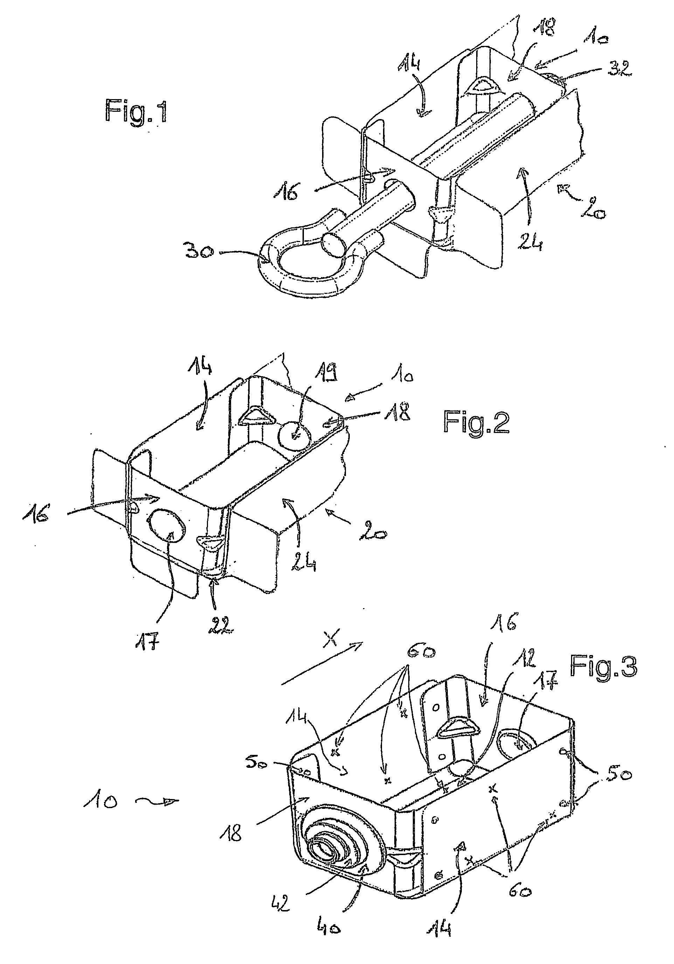

Tel que représenté à la figure 1, un boîtier 10 selon l'invention est composé de différents battants formant une unique et même pièce, ce boîtier étant disposé à l'intérieur d'un longeron arrière 20 du véhicule automobile.

Ce longeron 20 peut présenter une forme classique en « U », ou à titre d'exemple une forme en marche d'escalier. Le boîtier 10 est formé d'une base 12 sensiblement horizontale et soudée sur la paroi horizontale 22 du longeron, et au moins d'un montant latéral 14 sensiblement vertical et soudé contre une paroi montante 24 du longeron. Le boîtier 10 est soudé par points dans le longeron 20, de façon classique.

Deux battants 16, 18 sont pliés et rabattus perpendiculairement à la base 12 et/ou au montant latéral 14, de sorte que ces battants 16, 18 soient parallèles et positionnées dans des plans sensiblement verticaux. Chaque battant 16, 18 est muni d'un alésage 17, 19 apte à guider et maintenir un anneau de remorquage 30 par rapport au boîtier 10.

Tel que représenté aux figures 1 et 2, un premier battant 16 est formé par une première extrémité, selon une première direction X, de la base 12 qui est rabattue sensiblement perpendiculairement à cette base 12. Le deuxième battant 18 est formé par une deuxième extrémité de la base 12, selon cette première direction X, qui est rabattue sensiblement perpendiculaire à cette base 12, de sorte que les deux battants 16 et 18 soient sensiblement parallèles et que les deux alésages 17 et 19 soient sensiblement coaxiaux. Deux montants latéraux 14 sont pliés et rabattus sur les flans de la base 12, de manière à former, avec les extrémités et la base 12, un boîtier 10 présentant sensiblement la forme d'un parallélépipède ouvert sur le dessus.

Selon un mode de réalisation particulier et non représenté, le premier 16 et le deuxième 18 battant du boîtier 10 peuvent être formés respectivement par une extrémité rabattue du premier et du deuxième montant latéral 14, de sorte que chaque battant 16, 18 soit positionné de part et d'autre de la base plan 12 selon la première direction X. Le boîtier 10 présente ainsi toujours sensiblement cette forme de parallélépipède ouvert sur le dessus, mais en pliant et rabattant des parties différentes de la même pièce.

Le boîtier 10 selon l'invention, formé dans tous les cas sans pièce rapportée et soudé directement sur le longeron 20, assure ainsi une coaxialité optimale des deux alésages 17 et 19 par lesquels passe l'anneau de remorquage 30, ce qui favorise un meilleur rattrapage des moments. Il n'est en effet pas nécessaire de prévoir un alésage 17 sur le premier battant 16 plus grand que nécessaire, et l'anneau 30 est ainsi mieux contrôlé en flexion. En outre, la formation d'un boîtier 10 par pliage sur la base d'une pièce unique en tôle permet des réalisations plus économiques et moins lourdes.

Tel que représenté à la figure 2, le deuxième battant 18, formant l'extrémité du boîtier 10 orientée vers l'avant du véhicule, est renforcé par une plaquette nervurée 40 sur laquelle est solidarisé un écrou 42 apte à coopérer avec une extrémité filetée 32 de l'anneau de remorquage 30. La plaquette nervurée 40 vise à réduire les mouvements de flexion subis par l'anneau de remorquage 30.

Selon un mode de réalisation représenté sur la figure 1, le boîtier 10 est soudé par points dans le longeron 20 de telle sorte que le premier battant 16 du boîtier 10 est situé dans le plan contenant l'extrémité libre du longeron 20. Il sera compris que, dans le cas d'utilisation d'un boîtier 10 de ce type sur des véhicules aux empattements différents, le premier battant 16 pourra être situé en porte à faux par rapport à l'extrémité du longeron 20, ou au contraire être situé à l'intérieur du volume défini par ce longeron 20.

Il est à noter que l'utilisation d'un boîtier 10 selon l'invention permet de supprimer les cordons de soudage à l'arc sur le longeron 20, nécessaire lors des mises en place de douille par le passé. L'ensemble des opérations de soudage est réalisé par soudage à point, ce qui diminue le coût et améliore à la fois la qualité et la répétabilité. Tel que représenté sur la figure 3, des premiers points de soudure 50 sont déjà réalisés pour souder les battants 16 et 18 sur les montants latéraux 14 (ou sur la base 12 si ces battants 16 et 18 sont issus du pliage des extrémités des montants latéraux 14), et pour souder la plaquette nervurée 40 sur le deuxième battant 18. Des seconds points de soudure 60 sont ensuite réalisés aux points de contact entre le fond 22 du longeron 20 et la base 12, et entre les parois verticales 24 du longeron 20 et les montants latéraux 14 du boîtier 10.

Tel que représenté sur les figures, l'anneau de remorquage 30 et le boîtier de fixation 10 associé sont positionnés à gauche du véhicule. Il sera compris toutefois qu'un tel anneau 30 pourrait être envisagé à la droite du véhicule, et que le boîtier 10 doit donc présenter une forme apte à être implanté indifféremment dans l'un ou l'autre des longerons 20 du véhicule.

L'invention n'est nullement limitée au mode de réalisation décrit et illustré qui n'a été donné qu'à titre d'exemple.

## Revendications

1. Boîtier de fixation (10) pour un moyen de remorquage (30) d'un véhicule automobile, ce boîtier (10) étant apte à être disposé à l'intérieur d'un longeron (20) du véhicule, et comportant au moins une base plan (12) s'étendant principalement selon une première direction et deux battants (16, 18) solidaires de cette base (12), ces deux battants (16, 18) étant sensiblement parallèles et munis chacun d'un alésage (17, 19) par lesquels est amené à passer l'anneau de remorquage, **caractérisé en ce qu'**au moins un premier battant (16) est formé par une première extrémité, selon la première direction, de la base (12) qui est rabattue sensiblement perpendiculairement à cette base (12), et **en ce que** les battants (16, 18) et la base (12) forment un boîtier (10) présentant sensiblement la forme d'un parallélépipède ouvert sur le côté opposé à la base plan (12).

2. Boîtier selon la revendication 1, **caractérisé en ce que** le deuxième battant (18) est formé par une deuxième extrémité de la base (12), selon la première direction, qui est rabattue sensiblement perpendiculaire à cette base (12), de sorte que les deux battants (16, 18) soient sensiblement parallèles et que les deux alésages (17, 19) soient sensiblement coaxiaux.

3. Boîtier selon la revendication 1, **caractérisé en ce qu'**il comporte deux montants (14) positionnés latéralement et perpendiculairement à la base plan (12), et **en ce que** le premier (16) et le deuxième (18) battant sont formés respectivement par une extrémité rabattue du premier et du deuxième flan (14), de sorte que chaque battant (16, 18) soit positionné de part et d'autre de la base plan (12) selon la première direction.

4. Boîtier selon l'une des revendications précédentes, **caractérisé en ce que** le deuxième battant (18) est renforcé par une plaquette (40), nervurée et munie d'un alésage fileté.

5. Boîtier selon la revendication précédente, **caractérisé en ce qu'**un écrou (42) est monté sur la plaquette nervurée (40).

6. Agencement de fixation pour un moyen de remorquage (30) d'un véhicule automobile, qui comporte un boîtier (10) tel que revendiqué selon les revendications 1 à 5, dans lequel le boîtier (10) est soudé à l'intérieur d'un longeron (20) formant la structure du véhicule.

7. Agencement selon la revendication précédente, **caractérisé en ce que** le boîtier (10) est soudé dans le longeron (20) de telle sorte que le premier battant (16) est situé dans le plan contenant l'extrémité du longeron (20).

8. Agencement selon l'une des revendications 6 et 7, dans lequel le moyen de remorquage (30) est formé d'au moins un tube à l'extrémité duquel un anneau de remorquage est monté, et dont l'autre extrémité (32) est fileté, **caractérisé en ce que** le deuxième battant (18) présente un alésage fileté apte à coopérer avec l'extrémité filetée (32) du moyen de remorquage (30), et **en ce que** le premier battant (16) présente un alésage (17) de dimension apte à laisser au tube un passage avec un faible jeu.

## Claims

1. Housing (10) for fixing a motor vehicle towing means (30), this housing (10) being suitable for placing in a side member (20) of the vehicle, and comprising at least one planar base (12) extending principally in a first direction and two leaves (16, 18) integral with this base (12), these two leaves (16, 18) being approximately parallel and each being provided with a bore (17, 19), the towing ring being passed through there bores, which housing is **characterized in that** at least one first leaf (16) is formed by a first end, in the first direction, of the base (12) which is bent approximately perpendicularly to this base (12), and **in that** the leaves (16, 18) and the base (12) form a housing (10) of an essentially parallelepiped shape, of which the opposite side to the planar base (12) is open.

2. Housing according to Claim 1, **characterized in that** the second leaf (18) is formed by a second end of the base (12), in the first direction, which is bent approximately perpendicular to this base (12), so that the two leaves (16, 18) are approximately parallel and the two bores (17, 19) are approximately coaxial.

3. Housing according to Claim 1, **characterized in that** it comprises two uprights (14) positioned laterally and perpendicularly to the planar base (12), and **in that** the first (16) and second (18) leaves are formed by bent ends of the first and second wings (14), respectively, so that each leaf (16, 18) is positioned on either side of the planar base (12) in the first direction.

4. Housing according to one of the preceding claims, **characterized in that** the second leaf (18) is reinforced with a ribbed disk (40) containing a tapped bore.

5. Housing according to the preceding claim, **characterized in that** a nut (42) is attached to the ribbed disk (40).

6. Fixing fitting for a motor vehicle towing means (30), which comprises a housing (10) according to Claims 1 to 5, in which the housing (10) is welded to the inside of a side member (20) forming the structure of the vehicle.

7. Fitting according to the preceding claim, **characterized in that** the housing (10) is welded to the inside of the side member (20) in such a way that the first leaf (16) is situated in the plane containing the end of the side member (20).

8. Fitting according to either of Claims 6 and 7, in which the towing means (30) is formed from at least one tube, to the end of which a towing ring is fitted, while the other end (32) is threaded, which fitting is **characterized in that** the second leaf (18) has a tapped bore able to engage with the threaded end (32) of the towing means (30), and **in that** the first leaf (16) has a bore (17) sized to allow the tube to pass through it with a small amount of clearance.

## Patentansprüche

1. Befestigungsgehäuse (10) für eine Abschleppvorrichtung (30) eines Kraftfahrzeugs, wobei dieses Gehäuse (10) des Fahrzeugs im Inneren eines Längsträgers (20) des Fahrzeugs angeordnet werden kann, mit mindestens einer ebenen Basis (12), die sich in erster Linie in einer ersten Richtung erstreckt, und zwei Blättern (16, 18), die fest mit dieser Basis (12) verbunden sind, wobei diese beiden Blätter (16, 18) im Wesentlichen parallel zueinander verlaufen und jeweils mit einer Bohrung (17, 19) versehen sind, durch die der Abschleppring geführt werden muss, **dadurch gekennzeichnet, dass** mindestens ein erstes Blatt (16) durch ein erstes Ende der Basis (12) in der ersten Richtung gebildet ist, das im Wesentlichen senkrecht zu dieser Basis (12) umgebogen ist, und dass die Blätter (16, 18) und die Basis (12) ein Gehäuse (10) bilden, das im Wesentlichen die Form eines auf der der ebenen Basis (12) gegenüberliegenden Seite offenen Parallelepipeds bildet.

2. Gehäuse nach Anspruch 1, **dadurch gekennzeichnet, dass** das zweite Blatt (18) durch ein zweites Ende der Basis (12) in der ersten Richtung gebildet ist, das im Wesentlichen senkrecht zu dieser Basis (12) umgebogen ist, so dass die beiden Blätter (16, 18) im Wesentlichen parallel zueinander verlaufen, und dass die beiden Bohrungen (17, 19) im Wesentlichen koaxial sind.

3. Gehäuse nach Anspruch 1, **dadurch gekennzeichnet, dass** es zwei Streben (14) aufweist, die lateral und senkrecht zur ebenen Basis (12) positioniert sind, und dass das erste (16) und das zweite (18) Blatt jeweils durch ein umgebogenes Ende der ersten und der zweiten Flanke (14) gebildet sind, so dass jedes Blatt (16, 18) auf beiden Seiten der ebenen Basis (12) in der ersten Richtung positioniert ist.

4. Gehäuse nach einem der vorhergehenden Ansprüche, **dadurch gekennzeichnet, dass** das zweite Blatt (18) durch eine Scheibe (40) verstärkt wird, die gerippt und mit einer Gewindebohrung versehen ist.

5. Gehäuse nach dem vorhergehenden Anspruch, **dadurch gekennzeichnet, dass** eine Mutter (42) an der gerippten Scheibe (40) angebracht ist.

6. Befestigungsanordnung für eine Abschleppvorrichtung (30) eines Kraftfahrzeugs, die ein Gehäuse (10) nach den Ansprüchen 1 bis 5 aufweist, wobei das Gehäuse (10) im Inneren eines Längsträgers (20) unter Bildung der Fahrzeugsstruktur verschweißt ist.

7. Befestigungsanordnung nach dem vorhergehenden Anspruch, **dadurch gekennzeichnet, dass** das Gehäuse (10) im Längsträger (20) so verschweißt ist, dass sich das erste Blatt (16) in der das Ende des Längsträgers (20) enthaltenden Ebene befindet.

8. Befestigungsanordnung nach einem der Ansprüche 6 und 7, wobei die Abschleppvorrichtung (30) aus mindestens einem Rohr gebildet ist, an dessen Ende ein Abschleppring montiert ist, und dessen anderes Ende (32) mit einem Gewinde versehen ist, **dadurch gekennzeichnet, dass** das zweite Blatt (18) eine Gewindebohrung aufweist, die mit dem Gewindeende (32) des Abschleppmittels (30) zusammenwirken kann, und dass das erste Blatt (16) eine Bohrung (17) aufweist, deren Abmessung ein Durchlassen des Rohrs mit einem geringen Spiel gestattet.
